# EUROPEAN PATENT APPLICATION

(11) **EP 4 756 944 A1**
(43) Date of publication of application: **10.06.2026**
(21) Application number: 24862017.1
(22) Date of filing: 05.09.2024
(51) Int. Cl.: H01M 8/2485

(54) **AIRFLOW DISTRIBUTION DEVICE AND ELECTROCHEMICAL ENERGY CONVERSION DEVICE COMPRISING SAME**

(30) Priority: 06.09.2023 CN 202311150482
(71) Applicant: Chaozhou Three-Circle (Group) Co., Ltd., Chaozhou, Guangdong 515646 (CN); SHENZHEN THREE-CIRCLE TECHNOLOGY CO., LTD., Guangdong 518000 (CN)
(72) Inventor: CHEN, Shuoshuo, Chaozhou, Guangdong 515646 (CN); XIAO, Yu, Chaozhou, Guangdong 515646 (CN)
(74) Representative: Metida
(86) International application number: PCT/CN2024/117032
(87) International publication number: WO 2025/051177

(57) **Abstract**

A gas flow distribution device and an electrochemical energy conversion device including the same. The gas flow distribution device includes a body (1), where the body (1) includes a first end face (13) and a second end face (14) arranged opposite each other, an exhaust passage (2) running through the first end face (13) and/or the second end face (14) is provided in the body (1), a pressure drop generating passage (3) is also provided in the body (1), two ends of the pressure drop generating passage (3) are in communication with the exhaust passage (2) and an outer side wall of the body (1), respectively, and the exhaust passage (2) is also in communication with a stack (8).

## Description

### TECHNICAL FIELD

The present disclosure relates to the field of electrochemical technologies, and in particular to a gas flow distribution device and an electrochemical energy conversion device including the same.

### BACKGROUND

At present, a solid oxide fuel cell (SOFC) and a solid oxide electrolysis cell (SOEC) can be collectively referred to as a solid oxide cell (SOC). The solid oxide cell (SOC) is an advanced electrochemical energy storage and conversion device, and has broad application prospects in the fields of clean energy generation and CO₂ conversion. The solid oxide fuel cell (SOFC) is an energy conversion device that can directly convert chemical energy stored in fuels and oxidants into electrical energy. The SOFC operates at a high temperature, usually in a range of from 700°C to 1000°C, thus, waste heat generated during electricity generation can be used to achieve cogeneration of heat and electricity, and an energy utilization efficiency can be up to 90%. The solid oxide electrolysis cell (SOEC) is an electrochemical device that converts electrical energy and thermal energy into chemical energy, and a reaction therein is a reverse of a reaction in a solid oxide fuel cell. As one of the main technical routes for hydrogen production by electrolysis of water today, the SOEC usually operates at 700-850°C, and the electrolysis efficiency is up to 85%-95%.

During the operation of the solid oxide cell (SOC), in order to improve its generated power or hydrogen production output, multiple stacks are usually connected in series to form a stack assembly. However, due to manufacturing and assembly deviations of the stacks, fluid pipelines, etc., a flow distribution entering each stack is uneven, which greatly limits the utilization rate of the raw material fluid in the stack assembly.

### SUMMARY

An objective of the present disclosure is to provide a gas flow distribution device and an electrochemical energy conversion device including the same, which reduces difference percentage in pressure drop among branch lines for individual stacks, thereby reducing the flow deviation caused by the pressure drop deviation in the stacks and fluid pipelines, enabling each stack to obtain a gas flow with the same and stable flow rate, and ensuring the utilization rate of the raw material fluid of the stack assembly.

In order to achieve the above objective, the present disclosure provides a gas flow distribution device including a body, where the body includes a first end face and a second end face arranged opposite each other, an exhaust passage running through the first end face and/or the second end face is provided in the body, a pressure drop generating passage is also provided in the body, and two ends of the pressure drop generating passage are respectively in communication with the exhaust passage and an outer side wall of the body.

Compared with the prior art, the gas flow distribution device in an embodiment of the present disclosure has the following beneficial effects. The pressure drop generating passage and the exhaust passage communicated with each other are provided in the body, then a fluid enters the body through an inlet of the pressure drop generating passage, and reaches the exhaust passage through the pressure drop generating passage, then enters the stack through the exhaust passage. By providing the pressure drop generating passage in the gas flow distribution device, and then sending the fluid with that has undergone a pressure drop into the stack through the exhaust passage, the overall pressure drop of branch lines for each stack can be greatly increased, which reduces difference percentage in pressure drop among branch lines for individual stacks, thereby reducing the flow deviation caused by the pressure drop deviation in the stacks and fluid pipelines, enabling each stack to obtain a gas flow with the same and stable flow rate, and ensuring the utilization rate of the raw material fluid of the stack assembly.

In a gas flow distribution device according to an embodiment of the present disclosure, an equivalent diameter D1 of a cross section of the pressure drop generating passage is in a range of from 0.5 mm to 20 mm.

In a gas flow distribution device according to an embodiment of the present disclosure, a length L of the pressure drop generating passage satisfies: 500×D1≥L≥25×D1.

In a gas flow distribution device according to an embodiment of the present disclosure, an equivalent diameter D2 of a cross section of the exhaust passage satisfies: 20×D1≥D2≥D1.

In a gas flow distribution device according to an embodiment of the present disclosure, a gas flow equal-distribution chamber is formed in the body, and the pressure drop generating passage is in communication with the exhaust passage through the gas flow equal-distribution chamber.

In a gas flow distribution device according to an embodiment of the present disclosure, in a height direction Z, a cross section of the body at an intersection of the gas flow equal-distribution chamber and the pressure drop generating passage is defined as a first cross section, an area of the first cross section is defined as S2, a cross sectional area of the pressure drop generating passage is defined as S1, and S1 and S2 satisfy: 5<S2: S1<100.

In a gas flow distribution device according to an embodiment of the present disclosure, a volume V1 of the gas flow equal-distribution chamber and a volume V2 of the body satisfy: 1/15≤V1/V2≤1/6.

In a gas flow distribution device according to an embodiment of the present disclosure, a gas inlet passage is provided at one end of the body away from the exhaust passage, and the gas inlet passage is in communication with a gas outlet chamber.

In a gas flow distribution device according to an embodiment of the present disclosure, the body includes a lug, where the lug includes a gas inlet lug and a gas outlet lug, the gas inlet lug and the gas outlet lug each include a lug body and a hollow ventilation portion formed in the lug body, the gas outlet chamber is in communication with the hollow ventilation portion of the gas outlet lug, and the pressure drop generating passage is in communication with the hollow ventilation portion of the gas inlet lug.

The present disclosure also provides an electrochemical energy conversion device, comprising at least one stack and the gas flow distribution device, where the stack and the gas flow distribution device are stacked, the stack abuts against the first end face or the second end face of the gas flow distribution device, the exhaust passage of the gas flow distribution device is in communication with a gas flow inlet of the stack, and the gas inlet passage of the gas flow distribution device is in communication with a gas flow outlet of the stack.

Compared with the prior art, an electrochemical energy conversion device of an embodiment of the present disclosure has the following beneficial effects. In the electrochemical energy conversion device of the present disclosure, the gas supply and gas exhaust of the stack are integrated in a gas flow distribution device, so that the electrochemical energy conversion device has a high degree of integration, occupies a small space, and has a low cost. Moreover, by providing a pressure drop generating passage in the gas flow distribution device, and then sending the fluid that has undergone a pressure drop into the stack through the exhaust passage, gas flow is uniformly distributed to multiple stacks in the electrochemical energy conversion device, thereby improving the abilities of the electrochemical energy conversion device to withstand fluctuations in parameters such as flow rate of an inlet gas flow, current, calorific value, and temperature.

Additional aspects and advantages of the present disclosure will be provided in part in the following description and in part will be obvious from the following description, or will be learned through practice of the present disclosure.

### BRIEF DESCRIPTION OF THE DRAWINGS

Fig. 1 is an external schematic diagram of a gas flow distribution device according to an embodiment of the present disclosure;
Fig. 2 is an internal schematic diagram of a gas flow distribution device according to an embodiment of the present disclosure, with an outermost plate removed;
Fig. 3 is an exploded schematic diagram of a gas flow distribution device according to an embodiment of the present disclosure;
Fig. 4 is a bottom view schematically showing an internal structure of a gas flow distribution device according to an embodiment of the present disclosure, with another outermost plate removed;
Fig. 5 is a cross sectional schematic view taken along line A-A in Fig. 4;
Fig. 6 is an external schematic diagram of a gas flow distribution device according to another embodiment of the present disclosure;
Fig. 7 is a bottom view schematically showing an internal structure of a gas flow distribution device according to another embodiment of the present disclosure, with an outermost plate removed;
Fig. 8 is an external schematic diagram of a gas flow distribution device according to a further embodiment of the present disclosure;
Fig. 9 is an internal section view of a gas flow distribution device according to a further embodiment of the present disclosure;
Fig. 10 is an exploded schematic diagram of an electrochemical energy conversion device according to an embodiment of the present disclosure.

In the drawings, 1, body; 11, connecting channel; 12, sealing member; 13, first end face; 14, second end face; 2, exhaust passage; 3, pressure drop generating passage; 4, gas flow equal-distribution chamber; 41, first section; 5, gas inlet passage; 6, gas outlet chamber; 7, lug; 71, lug body; 72, hollow ventilation portion; 73, gas inlet lug; 74, gas outlet lug; 8, stack; 81, gas flow inlet; 82, gas flow outlet; 9, gas flow supply pipe; 10, gas flow exhaust pipe; X, length direction; Y, width direction; Z, height direction.

### DETAILED DESCRIPTION

Examples of the present disclosure are described in detail as below and are shown in the attached drawings, in which identical or similar marks represent identical or similar components or components with identical or similar functions. The following examples described with reference to the attached drawings are illustrative and used to explain the present disclosure, and they cannot be construed as the limitations thereof.

In the description of the present disclosure, it should be understood that references to directional or positional relationships, such as "upper", "lower", "up", "down", "front", "rear", "left", "right", etc., are based on the directional or positional relationships shown in the drawings. These references are used only for the convenience of describing and simplifying the present disclosure, and do not indicate or imply that the referred device or element must have a specific orientation or be constructed and operated in a specific orientation, and therefore should not be understood as a limitation on the present disclosure.

In the description of the present disclosure, "several" means one or more, "multiple" means two or more, terms such as "greater than", "less than", "exceed" etc. are understood to exclude the number itself, and terms such as "above", "below", "within" etc. are understood to include the number itself. If terms such as "first" and "second" are used, they are only used for distinguishing the indicated technical features, and cannot be understood as indicating or implying the relative importance, implicitly indicating the indicated the number of the indicated technical features, or implicitly indicating the sequence of the indicated technical features.

In the description of the present disclosure, unless otherwise clearly defined, terms such as "arranged", "mounted", and "connected" should be understood in a broad sense, and technicians in the relevant technical field can reasonably determine the specific meanings of the above terms in the present disclosure in combination with the specific content of the technical solution.

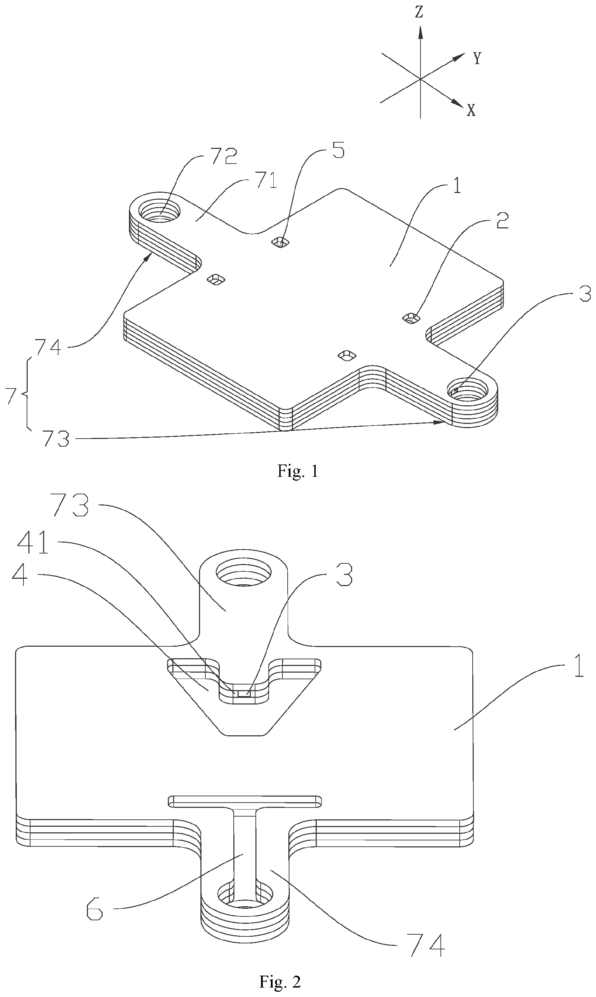

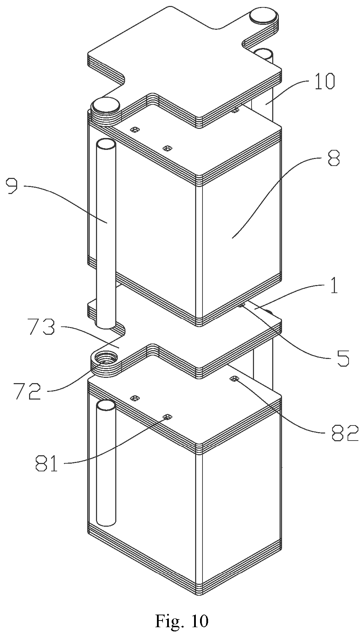

As shown in Fig. 1 and Fig. 10, in a preferred embodiment of the present disclosure, a gas flow distribution device includes a body 1, which is in a flat plate shape and includes a first end face 13 and a second end face 14 arranged opposite each other. An exhaust passage 2 running through the first end face 13 and/or the second end face 14 is provided in the body 1. It can be understood that the exhaust passage 2 may run through the first end face 13 or the second end face 14 in a height direction Z, or may simultaneously run through the first end face 13 and the second end face 14 in a height direction Z, which is not specifically limited here. A pressure drop generating passage 3 is also provided in the body 1, and the pressure drop generating passage 3 is arranged horizontally, that is, the pressure drop generating passage 3 extends in a horizontal plane defined by a length direction X and a width direction Y. Two ends of the pressure drop generating passage 3 are respectively in communication with the exhaust passage 2 and an outer sidewall of the body 1. The fluid enters the body 1 through an inlet of the pressure drop generating passage 3, reaches the exhaust passage 2 through the pressure drop generating passage 3, and then enters the stack 8 through the exhaust passage 2. By providing the pressure drop generating passage 3 in the gas flow distribution device, and then sending the fluid that has undergone a pressure drop into the stack 8 through the exhaust passage 2, the overall pressure drop of branch lines for each stack 8 can be greatly increased, which reduces difference percentage in pressure drop among branch lines for individual stack 8, thereby reducing the flow deviation caused by the pressure drop deviation in the stacks 8 and fluid pipelines, enabling each stack 8 to obtain a gas flow with the same and stable flow rate, and ensuring the utilization rate of the raw material fluid of the stack assembly. Further, one or more exhaust passages 2 can be provided. If only one exhaust passage 2 is provided, it is located in the body 1 at one end of the pressure drop generating passage 3 close to the center of the body 1. If a plurality of exhaust passages 2 are provided, they are preferably evenly and symmetrically distributed around the pressure drop generating passage 3, which is not specifically limited here.

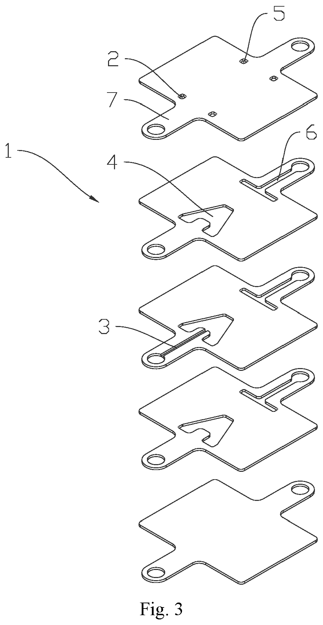

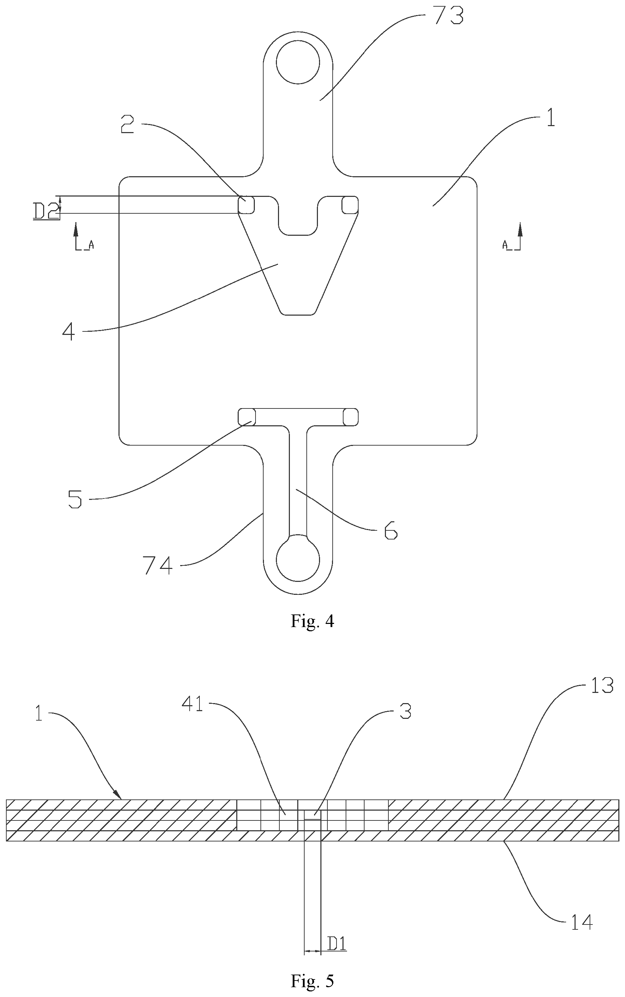

As shown in Fig. 2 to Fig. 5, in some embodiments of the present disclosure, an equivalent diameter D1 of a cross section of the pressure drop generating passage 3, that is, the cross section of the pressure drop generating passage 3 in a height direction Z, is in a range of from 0.5 mm to 20 mm. The equivalent diameter D1 of the cross section of the pressure drop generating passage 3 is calculated according to the equation: D1= 4×A/C, where A is an area of the cross section, and C is a circumference of the cross section. The equivalent diameter D1 of the cross section of the pressure drop generating passage 3 directly affects the pressure drop generating effect. If D1 is less than 0.5 mm, a velocity of the fluid in the pressure drop generating passage 3 will be too large; and if the velocity of the fluid exceeds 0.5 times the speed of sound, compressible fluid may be generated, resulting in unstable pressure drop in the pressure drop generating passage 3. If D1 is greater than 20 mm, the pressure drop generating effect of the pressure drop generating passage 3 is poor, which may make a ratio of the pressure drop in the pressure drop generating passage 3 to the pressure drop in the stack 8 be less than 5:1, resulting in poor uniform fluid distribution effect of the gas flow distribution device, and affecting the equal and stable gas flow for each stack 8. It can be understood that the cross section of the pressure drop generating passage 3 can be a circle or a rectangle, only if its equivalent diameter can meet the above exemplary limitations, which is not specifically limited here.

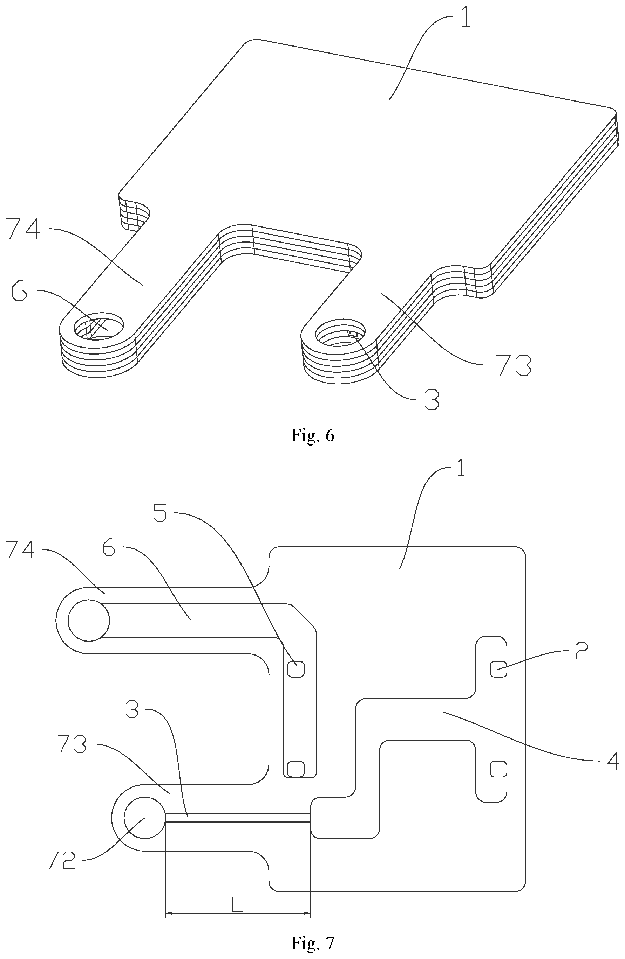

As shown in Fig. 7, in some embodiments of the present disclosure, a length L of the pressure drop generating passage 3 satisfies: 500×D1≥L≥25×D1, and a ratio of the length of the pressure drop generating passage 3 to the equivalent diameter of the cross section of the pressure drop generating passage 3 may affect the pressure drop generating effect. If L<25×D1, the fluid may not undergo complete pressure drop generating in the pressure drop generating passage 3, making the pressure drop generating effect of the pressure drop generating passage 3 unstable, which may also cause a poor pressure drop generating effect, causing a ratio of the pressure drop in the pressure drop generating passage 3 to the pressure drop in the stack 8 to be less than 5:1, thereby impairing the uniform fluid distribution effect of the gas flow distribution device. If L>500×D1, the pressure drop generating passage 3 is relatively long as a whole, occupies a large amount of the internal space in the gas flow distribution device, and easily interfering with other structural designs in the gas flow distribution device.

As shown in Fig. 2 to Fig. 5, in some embodiments of the present disclosure, an equivalent diameter D2 of a cross section of the exhaust passage 2 satisfies: 20×D1≥D2≥D1. The fluid needs to flow into the stack 8 through the exhaust passage 2, so the equivalent diameter of the cross section of the exhaust passage 2 also needs to be limited. If D2>20×D1, the cross section of the exhaust passage 2 is relatively large, so that after the gas flow distribution device and the stack 8 are assembled, it is difficult to seal the exhaust passage 2 and the stack 8, and fluid leakage may easily occur. If D2<D1, the cross section of the exhaust passage 2 is relatively small, and a velocity of the fluid running through the exhaust passage 2 into the stack 8 is too fast, which can easily cause uneven distribution of the fluid at the inlet of the stack 8.

As shown in Fig. 2 to Fig. 5, in some embodiments of the present disclosure, a gas flow equal-distribution chamber 4 is formed in the body 1, and the pressure drop generating passage 3 is in communication with the exhaust passage 2 through the gas flow equal-distribution chamber 4. After running through the pressure drop generating passage 3, the gas flow enters the gas flow equal-distribution chamber 4, and then flows into the exhaust passage 2 through the gas flow equal-distribution chamber 4. The gas flow equal-distribution chamber 4 serves to temporarily accommodate the fluid that has undergone a pressure drop, and the gas flow equal-distribution chamber 4 extends inside the body 1 on the horizontal plane, and can take a variety of shapes, which is not specifically limited here. A plurality of exhaust passages 2 may also be provided. Therefore, providing the gas flow equal-distribution chamber 4 between the outlet of the pressure drop generating passage 3 and the exhaust passages 2 allows the velocity and flow rate of the gas flow entering each exhaust passage 2 to be relatively equal, thereby improving the fuel utilization rate in the stack 8.

As shown in Fig. 2, in some embodiments of the present disclosure, in a height direction Z, a cross section of the body 1 at an intersection of the gas flow equal-distribution chamber 4 and the pressure drop generating passage 3 is defined as a first cross section 41, that is, the first cross section 41 is formed in a plane defined by the width direction Y and the height direction Z. An area of the first cross section 41 is defined as S2, a cross sectional area of the pressure drop generating passage 3, that is a cross section area of the pressure drop generating passage 3 in the height direction Z, is defined as S1, and S1 and S2 satisfy: 5<S2: S1<100. If S2:S1 is less than 5, the area of the first cross section 41 and the cross sectional area of the pressure drop generating passage 3 is slightly different, resulting in a small local pressure drop at a junction between the pressure drop generating passage 3 and the gas flow equal-distribution chamber 4, thereby reducing the pressure drop generating effect. If S2:S1 is greater than 100, the area of the first cross section 41 and the cross sectional area of the pressure drop generating passage 3 is significantly different, and the fluid flow at a junction between the gas flow equal-distribution chamber 4 and the pressure drop generating passage 3 will be unstable. Besides, the structure of the gas flow equal-distribution chamber 4 is not easy to design, which is easy to interfere with the arrangement of other structures.

In some embodiments of the present disclosure, a volume V1 of the gas flow equal-distribution chamber 4 and a volume V2 of the body 1 satisfy: 1/15<V1/V2<1/6. The gas flow equal-distribution chamber 4 is provided to allow the gas flow to enter each exhaust passage 2 more evenly after running through the pressure drop generating passage 3. If the volume of the gas flow equal-distribution chamber 4 is too small relative to the volume of the body 1, that is, if V1/V2 is less than 1/15, the velocity of the fluid in the gas flow equal-distribution chamber 4 may be too high, causing the Reynolds number of the fluid to be too large, so that the local gas flow in the gas flow equal-distribution chamber 4 may develop into turbulence, resulting in unstable flow and poor equal-distribution effect, and further impairing the gas flow distribution in the stack 8. If V1/V2 is greater than 1/6, the gas flow equal-distribution chamber 4 is too large relative to the volume of the body 1, and occupies most of the space in the body 1, which is easy to interfere with other structures in the body 1.

As shown in Fig. 1 and Fig. 2, in some embodiments of the present disclosure, a gas inlet passage 5 is provided in the body 1 at one end of the body 1 away from the exhaust passage 2, and the gas inlet passage 5 is in communication with a gas outlet chamber 6. The exhaust gas generated by a reaction in the stack 8 in the electrochemical energy conversion device can enter the body 1 through the gas inlet passage 5, enter the exhaust chamber 6 in the body 1, and then be discharged from the body 1 through the exhaust chamber 6. The above-mentioned structures make the gas flow distribution device not only play a role in gas flow distribution when the gas flow enters the gas flow distribution device, but also play a role in collecting and discharging the exhaust gas generated by the reaction in the electrochemical energy conversion device. Specifically, a cross section of the gas inlet passage 5 in the horizontal direction can be circular or strip-shaped, depending on the shape of the exhaust pipe of the stack 8 connected thereto.

As shown in Fig. 1 and Fig. 2, in some embodiments of the present disclosure, the body 1 includes a lug 7, the lug 7 is formed by extending outward from the outer side wall of the body 1. The lug 7 includes a gas inlet lug 73 and a gas outlet lug 74. The exhaust chamber 6 is in communication with a hollow ventilation portion 72 of the gas outlet lug 74, and the pressure drop generating passage 3 is in communication with the hollow ventilation portion 72 of the gas inlet lug 73, so that the pressure drop generating passage 3 and the gas outlet chamber 6 can be in communication with the outside. The gas inlet lug 73 and the gas outlet lug 74 each include a lug body 71 and a hollow ventilation portion 72 formed in the lug body 71. Specifically, a part of the pressure drop generating passage 3 is located in the lug body 71 of the gas inlet lug 73, which extends from the gas flow equal-distribution chamber 4 to the hollow ventilation portion 72 of the gas inlet lug 73; and a part of the gas outlet chamber 6 is located in the lug body 71 of the gas outlet lug 74, which extends from the gas inlet passage 5 to the hollow ventilation portion 72 of the gas outlet lug 74.

As shown in Fig. 1 and Fig. 2, in some embodiments of the present disclosure, the gas inlet lug 73 and the gas outlet lug 74 are symmetrically arranged on two sides of the body 1, and the hollow ventilation portion 72 in the lug body 71 can be in communication with a fuel gas pipeline. The gas outlet chamber 6 and the pressure drop generating passage 3 are respectively in communication with the gas outlet lug 74 and the gas inlet lug 73 and an opening in communication with the pressure drop generating passage 3 is provided on an inner side wall of the hollow ventilation portion 72 of the gas inlet lug 73. The gas outlet chamber 6 and the pressure drop generating passage 3 are respectively provided in the gas outlet lug 74 and the gas inlet lug 73 extending outward, so that lengths of the gas outlet chamber 6 and the pressure drop generating passage 3 can be extended, and the gas outlet chamber 6 and the pressure drop generating passage 3 have sufficient lengths to ensure their exhaust or pressure drop generating functions.

As shown in Fig. 6 and Fig. 7, in some embodiments of the present disclosure, the gas inlet lug 73 and the gas outlet lug 74 are arranged on the same side wall of the body 1, and the gas outlet chamber 6 and the pressure drop generating passage 3 are in communication with the gas outlet lug 74 and the gas inlet lug 73, respectively. Compared with the embodiments shown in Fig. 1 to Fig. 5 above, in this embodiment, an inlet of the pressure drop generating passage 3 and an outlet of the gas outlet chamber 6 are arranged on the same side to facilitate the circulation and recycling of the fluid. In this configuration, the lengths of the gas inlet lug 73 and the gas outlet lug 74 on the same side are different, so that a gas flow supply pipe 9 and a gas flow exhaust pipe 10 do not interfere with each other, and it is also convenient to distinguish the gas inlet passage 5 and the exhaust passage 2 during assembly.

As shown in Fig. 1, Fig. 2 and Fig. 3, in some embodiments of the present disclosure, the body 1 includes a plurality of plates of identical dimensions, which are stacked and connected to form the body 1. In the above two embodiments where the gas outlet lug 74 and the gas inlet lug 73 are provided for gas exhaust and gas entering, respectively, the body 1 is formed by a plurality of plates which are stacked. Since the structures in the gas flow distribution device, such as the pressure drop generating passage 3, the exhaust passage 2, the gas inlet passage 5 and the gas flow equal-distribution chamber 4, are all located inside the body 1, if a single thick plate is used as the body 1 of the gas flow distribution device, it is difficult to process the aforementioned structures located inside the body 1. Therefore, certain processing can be performed on a plurality of plates, and these plates can be welded together to form a gas flow distribution device. This configuration reduces the processing difficulty of the gas flow distribution device of the present disclosure, saves certain processing costs, and improves processing efficiency to some extent.

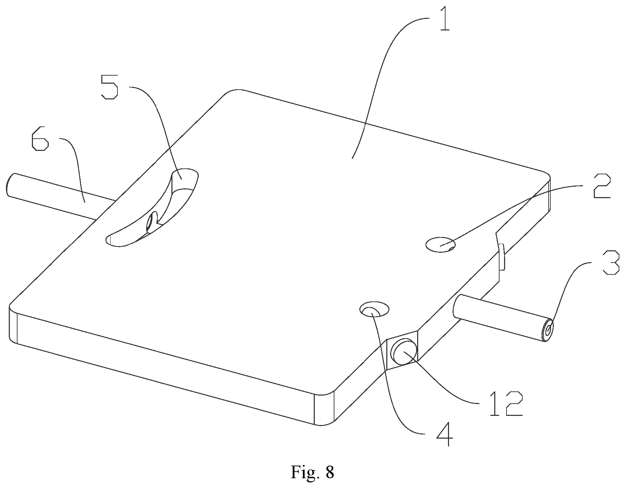

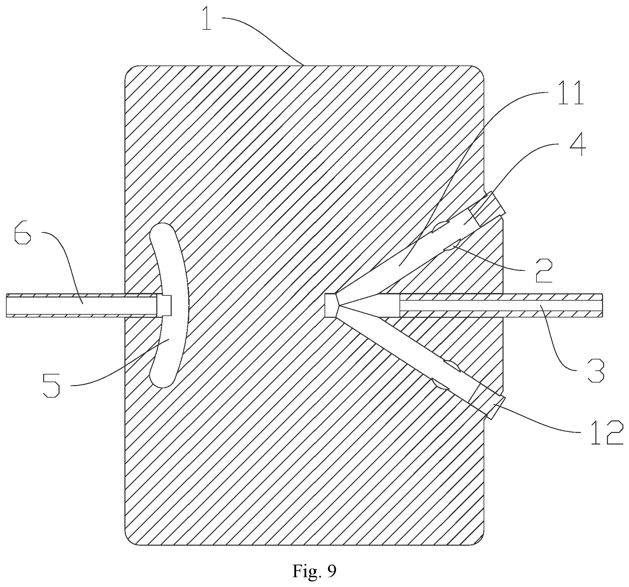

As shown in Fig. 8 and Fig. 9, in some embodiments of the present disclosure, the body 1 is constructed as a single-layer plate, and structures such as a pressure drop generating passage 3, an exhaust passage 2, a gas inlet passage 5, and a gas flow equal-distribution chamber 4 can be processed into the single-layer plate by drilling. Specifically, the body 1 includes at least two connecting channels 11, one end of each connecting channel 11 is in communication with the pressure drop generating passage 3, and the other end is in communication with an outer side wall of the body 1 and is provided with a sealing member 12. The two connecting channels 11 form the gas flow equal-distribution chamber 4 inside the body 1. In this embodiment, a lug 7 can also be provided to accommodate the gas outlet chamber 6 and the pressure drop generating passage 3. During processing, three holes are drilled in an arrow shape on one side of the body 1 where the pressure drop generating passage 3 is to be set. The hole in the middle is configured according to the relevant settings of the pressure drop generating passage 3. The channels formed by drilling holes at two sides serve as the gas flow equal-distribution chamber 4, and the sealing members 12 are used to seal the channels formed by drilling holes at two sides from the outside to prevent gas leakage during the gas entering process.

As shown in Fig. 10, the present disclosure also provides an electrochemical energy conversion device, comprising at least one stack 8 and a gas flow distribution device of any one of the above embodiments. The stack 8 and the gas flow distribution device are stacked. Only one stack 8 can be provided, and the stack can abut against the first end face 13 or the second end face 14 to connect with the gas flow distribution device. Alternatively, a plurality of stacks 8 can be provided, the plurality of stacks 8 are stacked and a gas flow distribution device is arranged between two adjacent stacks 8. The stacks 8 respectively abut against the first end face 13 and the second end face 14 of the gas flow distribution device to connect with the gas flow distribution device. The exhaust passage 2 is in communication with a gas flow inlet 81 of the stack 8, and the gas inlet passage 5 is in communication with a gas flow outlet 82 of the stack 8. A gas flow supply pipe 9 and a gas flow exhaust pipe 10 are also provided at two sides of the stack 8. The gas flow flows into the pressure drop generating passage 3 through the gas flow supply pipe 9, then enters the gas flow equal-distribution chamber 4 where the velocity and flow rate of the gas flow are regulated, then runs through the exhaust passage 2 and flows into the stack from the gas flow inlet 81 to participate in the reaction. After the reaction is completed, the gas flow flows through the gas flow inlet 81 from the gas flow outlet 82 of the stack, then enters the gas outlet chamber 6, and is finally discharged from the gas outlet chamber 6 to the gas flow exhaust pipe 10.

The electrochemical energy conversion device of the present disclosure realizes the integration of gas supply and gas exhaust of the stack 8 in a gas flow distribution device, achieving a high degree of integration, small space occupation and low cost. Furthermore, by providing a pressure drop generating passage 3 in the gas flow distribution device, and then sending the gas flow that has undergone a pressure drop into the stack 8 through the exhaust passage 2, uniform gas flow distribution for each stack 8 in the electrochemical energy conversion device is achieved, and the ability of the electrochemical energy conversion device to withstand fluctuations in parameters such as flow rate of the inlet gas flow, current, calorific value, and temperature is improved.

The working process of the electrochemical energy conversion device of the present disclosure is as follows: providing the pressure drop generating passage 3 and the exhaust passage 2 connected with each other in the body 1 of the gas flow distribution device; the fluid entering the body 1 through the inlet of the pressure drop generating passage 3, reaching the exhaust passage 2 through the pressure drop generating passage 3, and then entering the stack 8 through the exhaust passage 2 via the gas flow inlet 81 of the stack 8; the exhaust gas from the stack 8 exiting through the gas flow outlet 82 of the stack 8, entering the body 1 through the gas inlet passage 5, entering the gas outlet chamber 6 in the body 1, and then being discharged from the body 1 through the gas outlet chamber 6.

In summary, embodiments of the present disclosure provide a gas flow distribution device and an electrochemical energy conversion device comprising the same, with high integration, small space occupation, and low cost, thereby reducing the difference percentage in pressure drop among branch lines for individual stacks 8, achieving uniform distribution of gas flow in the plurality of stacks 8 in the electrochemical energy conversion device, and improving the ability of the electrochemical energy conversion device to withstand fluctuations in parameters such as flow rate of the inlet gas flow, current, calorific value, and temperature.

The above are only preferred embodiments of the present disclosure. It should be pointed out that, for ordinary technicians in this technical field, several improvements and substitutions can be made without departing from the technical principles of the present disclosure. These improvements and substitutions should also be regarded as within the protection scope of the present disclosure.

## Claims

1. A gas flow distribution device, **characterized by** comprising a body, wherein the body comprises a first end face and a second end face arranged opposite each other, an exhaust passage running through the first end face and/or the second end face is provided in the body, a pressure drop generating passage is also provided in the body, and two ends of the pressure drop generating passage are respectively in communication with the exhaust passage and an outer sidewall of the body.

2. The gas flow distribution device according to claim 1, **characterized in that** an equivalent diameter D1 of a cross section of the pressure drop generating passage is in a range of from 0.5 mm to 20 mm.

3. The gas flow distribution device according to claim 2, **characterized in that** a length L of the pressure drop generating passage satisfies: 500×D1≥L≥25×D1.

4. The gas flow distribution device according to claim 2, **characterized in that** an equivalent diameter D2 of a cross section of the exhaust passage satisfies: 20×D1≥D2≥D1.

5. The gas flow distribution device according to claim 1, **characterized in that** a gas flow equal-distribution chamber is formed in the body, and the pressure drop generating passage is in communication with the exhaust passage through the gas flow equal-distribution chamber.

6. The gas flow distribution device according to claim 5, **characterized in that** in a height direction Z, a cross section of the body at an intersection of the gas flow equal-distribution chamber and the pressure drop generating passage is defined as a first cross section, an area of the first cross section is defined as S2, a cross sectional area of the pressure drop generating passage is defined as S1, and S1 and S2 satisfy: 5<S2: S1<100.

7. The gas flow distribution device according to claim 5, **characterized in that** a volume V1 of the gas flow equal-distribution chamber and a volume V2 of the body satisfy: 1/15≤V1/V2≤1/6.

8. The gas flow distribution device according to claim 1, **characterized in that** a gas inlet passage is provided at one end of the body away from the exhaust passage, and the gas inlet passage is in communication with a gas outlet chamber.

9. The gas flow distribution device according to claim 8, **characterized in that** the body comprises a lug, the lug comprises a gas inlet 1ug and a gas outlet lug, the gas inlet lug and the gas outlet lug each comprise a lug body and a hollow ventilation portion formed in the lug body, the gas outlet chamber is in communication with the hollow ventilation portion of the gas outlet lug, and the pressure drop generating passage is in communication with the hollow ventilation portion of the gas inlet lug.

10. An electrochemical energy conversion device, **characterized by** comprising at least one stack and the gas flow distribution device according to any one of claims 1 to 9, the stack and the gas flow distribution device are stacked, the stack abuts against the first end face or the second end face of the gas flow distribution device, the exhaust passage of the gas flow distribution device is in communication with a gas flow inlet of the stack, and the gas inlet passage of the gas flow distribution device is in communication with a gas flow outlet of the stack.
